# EUROPÄISCHE PATENTSCHRIFT

(11) **EP 3 615 891 B1**
(45) Veröffentlichungstag und Bekanntmachung des Hinweises auf die Patenterteilung: **07.07.2021**
(21) Anmeldenummer: 18720581.0
(22) Anmeldetag: 25.04.2018
(51) Int. Cl.: G01C 21/34, G01C 21/36

(54) **VERFAHREN UND EINRICHTUNG ZUM ERZEUGEN VON DYNAMISCHEN HINWEISEN ÜBER EINE ÄNDERUNG EINER ROUTENFÜHRUNG**
METHOD AND DEVICE FOR GENERATING DYNAMIC INDICATIONS RELATING TO A MODIFICATION OF ROUTE GUIDANCE
PROCÉDÉ ET DISPOSITIF DE GÉNÉRATION D'INDICATIONS DYNAMIQUES CONCERNANT UN CHANGEMENT DE GUIDAGE D'ITINÉRAIRE

(30) Priorität: 28.04.2017 DE 102017207243
(43) Veröffentlichungstag der Anmeldung: 04.03.2020
(73) Patentinhaber: Continental Automotive GmbH, 30165 Hannover (DE)
(72) Erfinder: LINDEMANN, Robert, 65193 Wiesbaden (DE); HELLHUND, Jonas, 60438 Frankfurt am Main (DE)
(74) Vertreter: Continental Corporation
(86) Internationale Anmeldenummer: PCT/EP2018/060546
(87) Internationale Veröffentlichungsnummer: WO 2018/197537

(56) Entgegenhaltungen:
- EP-A1- 1 959 237
- WO-A1-2010/007668

## Beschreibung

### TECHNISCHES GEBIET

Die Erfindung betrifft das Gebiet der Fahrassistenzsysteme und insbesondere das der Navigationssysteme. Die Erfindung betrifft im Besonderen ein Verfahren und eine Einrichtung zum Erzeugen von dynamischen Hinweisen über eine Änderung einer Routenführung.

### TECHNISCHER HINTERGRUND

Die internationale Patentanmeldung WO 2010/007668 A1 beschreibt, wie von einer Einheit (102) zum Festlegen eines freien Intervalls entschieden wird, ob ein Beweger in einem freien Abschnitt einer Schnellstraße positioniert ist oder in einem mautpflichtigen Abschnitt. Dabei wird ein akustischer Hinweis über eine bevorstehende Abzweigung von einer geplanten Route erzeugt.

Die europäische Patentanmeldung EP1959237A1 offenbart eine Kartendarstellung in Abhängigkeit einer bevorstehenden Verzweigung, wobei ein dargestellter Kartenbereich derart verändert wird, dass die bevorstehende Verzweigung in ihm enthalten ist.

Moderne Fahrzeug-Navigationssysteme können auf Dienste zugreifen, welche aktuelle Verkehrsinformationen oder aktuelle Informationen über den Verkehrsfluss auf einer Straße beeinträchtigende Vorkommnisse für eine Region oder eine geplante Route bereit stellen. Wenn eine längere Route unter Führung durch das Navigationssystem befahren wird, können so Vorkommnisse, die erst nach dem Beginn der Routenführung auftreten und eine Änderung der Route erforderlich machen, bei der Berechnung einer neuen oder alternativen Rest-Route berücksichtigt werden.

Der zunehmende Verkehr und die stetig wachsende Zahl der für das Führen eines Fahrzeugs im Straßenverkehr zu beachtenden optischen und akustischen Signale - von anderen Verkehrsteilnehmern oder von Fahrerassistenzsystemen des eigenen Fahrzeugs stammend - stellen eine Herausforderung für den Fahrer dar, jeweils augenblicklich relevante Signale wahrzunehmen und weniger relevante Signale zu ignorieren.

So kann bspw. eine Information über eine Änderung der Routenführung dann interessant sein, wenn sich eine geschätzte Ankunftszeit signifikant verändert, in der Regel verschiebt sich diese nach hinten, oder wenn sich die Fahrstrecke signifikant verlängert. Eine Information über eine geänderte Routenführung ist jedoch für die meisten Fahrer ohne Belang, wenn sich keine signifikante Änderung der Ankunftszeit oder der Fahrstrecke ergibt.

Die zunehmende Vernetzung der Navigationssysteme, die das Beziehen aktuellster Verkehrsinformation und Information über den Verkehrsfluss in immer kürzeren Zeitabständen ermöglicht, führt dazu, dass eine Routenführung sich während des Befahrens einer geplanten Route immer häufiger ändert.

Bei einer unbedingten Sprachausgabe des Navigationssystems bei jeder Änderung der Route, egal wie signifikant, sehen sich viele Fahrer der Versuchung ausgesetzt, sich die geänderte Route auf dem Navigationssystem anzusehen. Dazu ist häufig eine Veränderung des sichtbaren Kartenausschnitts durch die entsprechende Bedienung einer Benutzerschnittstelle erforderlich, in der Regel durch Herauszoomen, wodurch eine insgesamt lange Ablenkung des Fahrers vom aktuellen Verkehrsgeschehen hervorgerufen wird.

Aber auch dann, wenn der Fahrer nur akustische Hinweise erhält, kann die Aufmerksamkeit des Fahrers stärker in Anspruch genommen werden, als wünschenswert wäre, etwa durch eine längliche akustische Ansage des Navigationssystems, welcher ggf. einer verschwindend geringen Veränderung der Route zugrunde liegen kann. Alternativ wird möglicherweise der Komfort des Fahrers oder anderer Fahrtteilnehmer eingeschränkt, weil beispielsweise für die längliche akustische Ausgabe das Unterhaltungsprogramm, etwa ein Musiktitel oder ein Hörbuch, unterbrochen werden.

### OFFENBARUNG DER ERFINDUNG

Es ist daher Aufgabe der Erfindung, eine unnötige Ablenkung eines Fahrers eines Kraftfahrzeugs durch Sprachausgaben eines Navigationssystems möglichst zu verhindern.

Diese Aufgabe wird mit einem Verfahren gemäß dem unabhängigen Verfahrensanspruch und einem Datenverarbeitungsgerät gemäß dem unabhängigen Vorrichtungsanspruch gelöst. Die abhängigen Ansprüche betreffen vorteilhafte Ausgestaltungen.

Ein Aspekt betrifft ein Verfahren zum Erzeugen von dynamischen Hinweisen über eine Änderung einer Routenführung. Das Verfahren kann in einer Rechnereinrichtung, welche einen oder mehrere Prozessoren enthält, wie einem Navigationssystem, einem Smartphone oder einem Tablet implementiert sein. Es werden ursprüngliche Navigationsrichtungen entlang einer ursprünglichen Route zwischen einem Ursprung und einem Ziel erzeugt. Diese ursprünglichen Navigationsrichtungen ergeben die ursprüngliche Route. Im Zeitlauf werden aktualisierte Navigationsrichtungen entsprechend einer Bewegung des Anwenders periodisch erzeugt, die eine aktualisierte Route ergeben. Die aktualisierten Navigationsrichtungen können bspw. jede Minute erzeugt werden. Aufgrund veränderter Verkehrsbedingungen wie Staus kann es dazu kommen, dass eine alternative Route zu bevorzugen ist, so dass die ursprünglichen Navigationsrichtungen nicht mehr mit den aktualisierten Navigationsrichtungen zusammenfallen. Es kommt mithin zu einer Abweichung von ursprünglicher Route und alternativer Route von einem bestimmten Ort an. Gemäß dem Verfahren wird eine alternative Route zu dem Ziel bestimmt, einschließlich des Ortes der Abweichung zwischen der ursprünglichen Route und der alternativen Route. Dies kann insbesondere dann geschehen, wenn sich das Fahrzeug an einem gegenwärtigen Ort auf der ursprünglichen Route befindet.

Unter ursprünglicher Route ist eine Route vor einer Änderung zu verstehen. Es können mehrere Änderungen hintereinander erfolgen. Bspw. kann eine erste ursprüngliche Route zu einer ersten alternativen Route geändert werden und im Folgenden die erste alternative Route zu einer zweiten alternativen Route geändert werden. In Bezug auf die zweite Änderung von der ersten alternativen Route zu der zweiten alternativen Route ist die erste alternative Route als eine ursprüngliche Route und zweite alternative Route als eine alternative Route definiert.

Das Verfahren beinhaltet sodann das Erzeugen eines akustischen Hinweises über eine Änderung der Routenführung in Abhängigkeit von der Position der Änderung in Bezug auf einen auf einem Display dargestellten Kartenausschnitt. Das Verfahren beinhaltet insbesondere das Erzeugen eines akustischen Hinweises über eine Änderung der Routenführung in Abhängigkeit des Zoom-Levels eines auf einem Display dargestellten Kartenausschnittes in Bezug auf den Ort der Abweichung. Es kommt für das Erzeugen des akustischen Hinweises mithin darauf an, ob sich der Ort der Abweichung bereits im aktuell dargestellten Kartenausschnitt befindet, demnächst im aktuell dargestellten Kartenausschnitt erscheinen wird oder nicht. Dies ist von der Entfernung zwischen der Position des Fahrzeuges und dem Ort und der Abweichung sowie vom Zoom-Level abhängig.

Der aktuell angezeigte Kartenausschnitt wird von den meisten Fahrern so eingestellt, manuell oder automatisch in Abhängigkeit von der Geschwindigkeit, dass nur wenige voraus liegende Änderungen der Fahrtrichtung oder Fahrspur sichtbar sind, dafür aber relativ viele Details in der auf dem Display gezeigten Karte sichtbar sind. Es kann davon ausgegangen werden, dass eine Änderung der Routenführung, die an einer weit außerhalb des derzeit angezeigten Kartenausschnitts liegenden Stelle der Route erfolgt, für den Fahrer von untergeordneter Bedeutung ist, weil sie erst in einigem zeitlichen Abstand zu entsprechenden Fahrmanövern führt. In dieser Zeit kann sich die Route erneut geändert haben, so dass eine zuvor erfolgte Sprachausgabe sich im Nachhinein als unnötig herausstellt.

Ein weiterer Aspekt betrifft das Erzeugen des Hinweises über eine Änderung der Routenführung. Dies kann erfolgen, wenn sich der Ort der Abweichung in einem vordefinierten Abstand außerhalb des Randes des dargestellten Kartenausschnittes befindet. Der vordefinierte Abstand kann sich als Anteil der vertikalen Bildhöhe des auf dem Display dargestellten Kartenausschnittes ergeben. So kann beispielsweise eine Sprachausgabe unterdrückt werden, wenn sich der Ort der Abweichung zwischen ursprünglicher und alternativer Route, weiter als bspw. 10% oder 15% oder 20% oder 25% der vertikalen Bildhöhe vom oberen Rand der derzeitigen Kartendarstellung außerhalb des Darstellungsbereichs des Bildschirms entfernt befindet. Der Anteil kann von einem Benutzer einstellbar oder auswählbar sein.

Als Variante dieses Aspekts kann die Ausgabe der Information über eine Routenänderung erfolgen, wenn der Ort der Abweichung zwischen ursprünglicher Route und alternativer Route innerhalb eines vorbestimmten Zeitraumes, bspw. in Kürze, auf dem Bildschirm dargestellt werden wird. Diese Variante schließt eine Verzögerung der Ausgabe der Information bis zu diesem Moment ein, sowie Situationen in welchen der Fahrer aus eigenem Antrieb heraus den Kartenausschnitt verändert, so dass der geänderte Teil der Route in den Darstellungsbereich fällt. In diesem Moment ist der Fahrer ohnehin "abgelenkt", so dass die zusätzliche Ablenkung nicht ins Gewicht fällt.

Gemäß eines anderen Aspekts wird eine Sprachausgabe ausgegeben, wenn innerhalb einer vordefinierten Zeit der Verzweigungspunkt zwischen ursprünglicher und alternativer Route erreicht wird. Hierdurch kann auch bei einem sehr kleinen auf dem Navigationsdisplay dargestellten Kartenausschnitt (maximaler Zoom-in) sichergestellt werden, dass die Information über die geänderte Route rechtzeitig vor Erreichen des Verzweigungspunkts ausgegeben wird.

Gemäß eines anderen Aspekts wird eine Sprachausgabe nur dann ausgegeben, wenn sich durch die alternative Route die Ankunftszeit um eine vordefinierte Zeit oder eine vordefinierte Strecke, absolut oder prozentual gemessen an der Restfahrzeit bzw. Restfahrstrecke, ändert. Eine gewisse Verschiebung der Ankunftszeit auf einen späteren Zeitpunkt nehmen die meisten Fahrer in Kauf, so dass dies nicht als störend empfunden wird. In einer Weiterbildung des Verfahrens wird dem Fahrer ermöglicht, die Grenzen dafür, ob eine akustische Ausgabe erfolgen soll oder nicht, selbst festzulegen.

Gemäß einem anderen Aspekt erfolgt bei einer Sprachausgabe gemäß einem der vorstehenden Aspekte vorübergehend, bspw. in einem begrenzter Zeitraum, oder bis Bestätigung durch Benutzereingabe erfolgt, eine automatische Anzeige der Gesamtroute, wobei die alternative Route hervorgehoben dargestellt wird. Die alternative Route kann farblich unterschiedlich im Vergleich zu der ursprünglichen Route oder blinkend dargestellt werden.

Gemäß einer Abwandlung des vorstehenden Aspekts erfolgt bei einer Sprachausgabe eine vorübergehende automatische Anzeige des Bereichs der geänderten Routen, also nur eines Ausschnitts der Gesamtstrecke. Es wird mithin nur ein Teilbereich einer Gesamtroute zwischen Ursprung und Ziel dargestellt, wobei der Teilbereich der Gesamtroute die alternative Route umfasst.

Bei allen Aspekten kann eine Anzeige der durch die Routenänderung hervorgerufenen zusätzlichen Fahrzeit im Display angezeigt werden, Hierbei kann eine nur wenig von der normalen Anzeige abweichende Darstellung bevorzugt sein, um nicht den Eindruck einer Warnmeldung zu erzeugen. Beispielsweis könnte neben der vor der Änderung berechneten Restfahrtdauer, etwa mit einem "+" getrennt, die durch die Änderung hinzugekommene Dauer stehen. Diese Anzeige kann für einen gewissen Zeitraum nach der Änderung aufrecht erhalten werden, beispielsweise für fünf Minuten, und danach kann die neue Restfahrtdauer in einer Zahl angezeigt werden.

Eine Routenänderung kann sich auch dadurch ergeben, dass der Fahrer eine andere Route fährt als vorgeschlagen. Auch in diesem Fall stimmen die aktualisierten Navigationsrichtungen nicht mit den ursprünglichen Navigationsrichtungen überein, da eine alternative Route zum Ziel berechnet wird. Das Fahrzeug befindet sich nun an einem gegenwärtigen Ort auf der alternativen Route. Der Ort der Abweichung zwischen ursprünglicher Route und alternativer Route wurde bereits durch das Fahrzeug passiert. Auch in diesem Fall kann ein akustischer Hinweis über eine Änderung der Routenführung in Abhängigkeit des Zoom-Levels eines auf einem Display dargestellten Kartenausschnitts in Bezug auf den Ort Abweichung erfolgen. Da der Ort der Abweichung bereits passiert wurde, wird ein akustischer Hinweis insbesondere nur dann erfolgen, wenn mit der durch den Fahrer selbst induzierten alternativen Routenführung eine nicht unerhebliche zusätzliche Fahrzeit einhergeht. Es kann Situationen geben, in welchem der Fahrer erst recht nur dann einen Hinweis erwartet, wenn es eine deutliche Streckenänderung gibt.

Ein Aspekt betrifft des Weiteren ein Datenverarbeitungsgerät mit mindestens einem Prozessor eingerichtet zum Erzeugen von ursprünglichen Navigationsrichtungen, entlang einer ursprünglichen Route zwischen einem Ursprung und einem Ziel. Der Prozessor ist ferner eingerichtet, insbesondere wenn sich das Fahrzeug auf einem gegenwärtigen Ort der ursprünglichen Route befindet, zum Bestimmen einer alternativen Route zu dem Ziel, einschließlich eines Ortes der Abweichung zwischen der ursprünglichen Route und der alternativen Route. Das Navigationssystem weist darüber hinaus Ausgabemittel zum Erzeugen eines akustischen Hinweises über eine Änderung der Routenführung in Abhängigkeit des Zoom-Levels eines auf einem Display dargestellten Kartenausschnittes in Bezug auf den Ort der Abweichung auf.

### KURZFASSUNG DER FIGUREN

Die Erfindung wird im Folgenden an Hand von Ausführungsbeispielen mit Bezug auf Figuren beschrieben. Es zeigen
- Fig. 1: ein Blockschaltbild eines Navigationssystems;
- Fig. 2: eine schematische Abbildung einer laufenden Navigationssitzung;
- Fig. 3: eine weitere schematische Abbildung einer laufenden Navigationssitzung;
- Fig. 4: eine weitere schematische Abbildung einer laufenden Navigationssitzung;
- Fig. 5: eine weiter schematische Abbildung einer laufenden Navigationssitzung; und
- Fig. 6: ein Flussdiagramm einer Ausgestaltung des Verfahrens.

### DETAILLIERTE BESCHREIBUNG

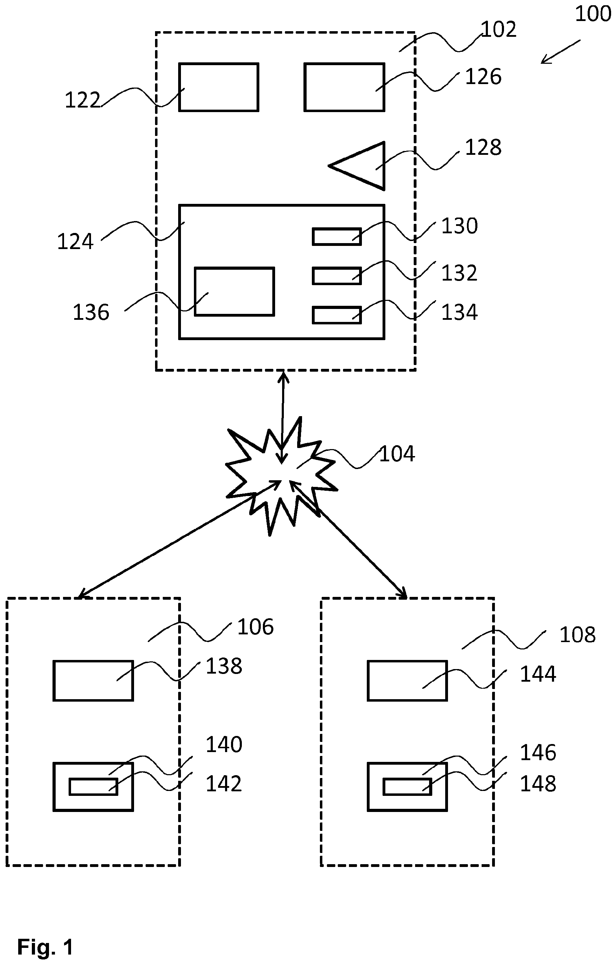

Fig. 1 zeigt ein Blockschaltbild eines Navigationssystems 100 mit einer Navigationseinrichtung 102, einem Kartenserver 106 und einem Server 108 zur Bereitstellung von Echtzeitverkehrsdaten, welche über ein Netzwerk 104 miteinander verbunden sind. Bei der Navigationseinrichtung kann es sich um ein im Fahrzeug eingebautes Navigationsgerät, ein Smartphone, ein Tablet oder ein beliebiges Gerät mit Navigationsfunktion handeln. Das Navigationsgerät weist eine Benutzerschnittstelle 126 mit einem Touchdisplay auf. Über das Touchdisplay kann ein Benutzer ein gewünschtes Navigationsziel eingeben. Hierfür kann ein geführtes Menü vorgesehen sein. Das Touchdisplay dient auch zur visuellen Ausgabe von Navigationsrichtungen, bspw. in Form einer Navigationsroute. Das Navigationsgerät 102 enthält darüber hinaus einen Lautsprecher 128 zur Ausgabe von Navigationsanweisungen. Das Navigationsgerät 102 wird durch den Prozessor 122 gesteuert und hat einen Speicher 124 zum Speichern von Kartendaten 130, Navigationsdaten 132 und Echtzeitverkehrsdaten 134.

Die Kartendaten 130 können über das Netzwerk 104, bspw. ein Mobilfunknetzwerk wie LTE, von einem Kartenserver 106 bezogen werden oder bereits anfänglich im Speicher 130 abgelegt sein. Der Kartenserver 106 enthält einen Prozessor 138 zum Steuern und zum Abrufen von in der Kartendatenbank 140 abgelegten Kartendaten 142. Der Kartenserver 106 stellt einen durch das Navigationsgerät 102 angeforderten Kartenausschnitt bereit. Das Navigations- und Kartenmodul 136 berechnet anhand der Kartendaten eine digitale Karte, die auf dem Touchdisplay 126 dargestellt werden kann.

Im Navigationsgerät berechnet zudem das Karten- und Navigationsmodul 136 anhand einer vom Benutzer vorgenommenen Eingabe, dem auf dem Display dargestellten Kartenausschnitt, der Position des Fahrzeuges und der Richtung des Fahrzeuges Navigationsdaten 132, welche im Speicher 124 abgelegt werden und von dort zur Anzeige im Display 126 bspw. in Form einer Navigationsroute gebracht werden können. Die Position des Fahrzeuges kann mit einem GPS-Modul und die Richtung des Fahrzeuges mit einem Kompass, bspw. einem elektronischen Kompass oder einem Kreiselkompass, oder mittels Erfassung von Fahrtrichtungsänderungen, z.B. mittels eines Gyrosensors, und entsprechendem Abgleich mit Kartendaten, sog. Map-Matching, bestimmt werden. Alternativ ist es möglich, die Navigationsdaten 132 in einem externen Server zu berechnen, der hier nicht dargestellt ist. Die Navigationsdaten 132 in Form von Navigationsrichtungen können zudem akustische Anweisungen und Hinweise beinhalten, die über akustische Ausgabemittel 128 wie eine Audioschnittstelle oder einen Lautsprecher ausgegeben werden. Bei dem Karten- und Navigationsmodul 136 kann es sich um eine separat ausführbare Softwareapplikation oder um ein PlugIn handeln. Die entsprechenden Instruktionen können vorkompiliert sein und direkt durch den Prozessor 122 zur Ausführung gebracht werden. Alternativ können diese von einer anderen Softwareapplikation zur Laufzeit interpretiert werden.

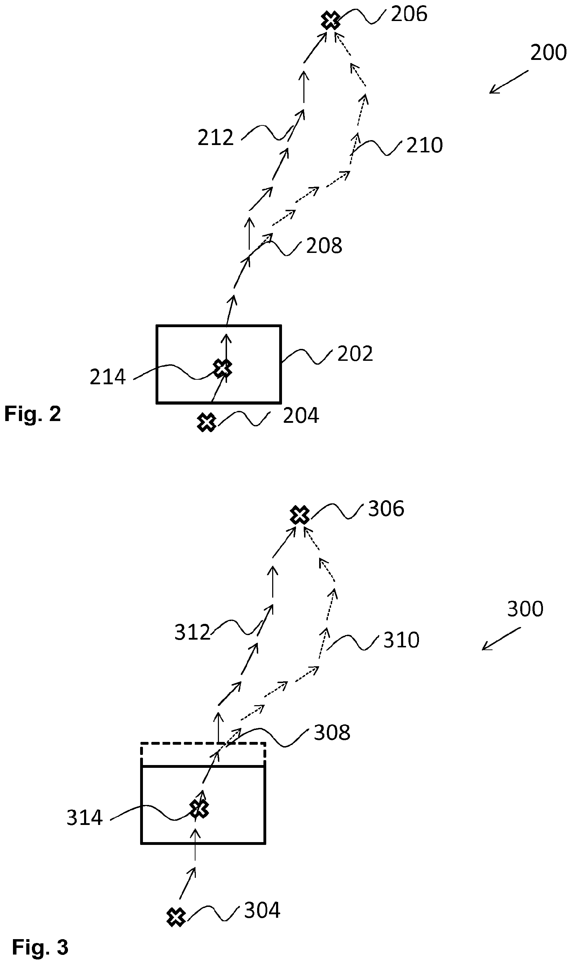

Das Navigationsgerät 102 ist zudem über das Netzwerk 104 mit dem Echtzeitverkehrsdatenserver 108 verbunden, um Echtzeitverkehrsdaten wie bspw. Meldungen über Staus oder vorübergehende Straßensperrungen anzufordern. Der Echtzeitverkehrsdatenserver 106 enthält einen Prozessor 144 zum Steuern und zum Abrufen von in der Verkehrsdatenbank 146 abgelegten Echtzeitverkehrsdaten 148. Anhand der Echtzeitverkehrsdaten 148 kann es angezeigt sein, alternative Routen mittels des Karten- und Navigationsmoduls 136 zu berechnen, welches dazu auf die Echtzeitverkehrsdaten 148 zugreift. Das Karten- und Navigationsmodul 136 fordert zu diesem Zweck in regelmäßigen Abständen, bspw. jede Minute, vom Echtzeitverkehrsdatenserver 108 Echtzeitverkehrsdaten 148 an und legt diese im Speicher 124 als gespeicherte Echtzeitverkehrsdaten 134 ab. Das Karten- und Navigationsmodul 136 analysiert die gespeicherten Echtzeitverkehrsdaten 134 hinsichtlich ihrer Relevanz für eine gegenwärtige Routenführung. Ist bspw. aufgrund einer Strecken- oder Fahrspursperrung die gegenwärtige Routenführung nicht möglich oder würde sich aufgrund eines Staus die verbleibende Fahrzeit erheblich verlängern, so berechnet das Karten- und Navigationsmodul 136 eine alternative Route. Dies soll anhand Fig. 2 verdeutlicht werden.

Fig. 2 zeigt eine durch das Navigationsgerät erzeugte ursprüngliche Routenführung zwischen Ursprung 204 und Ziel 206, welche anhand von Nutzereingaben durch das Karten- und Navigationsmodul 136 erzeugt wurde. Die Navigationsrichtungen 212 der ursprünglichen Routenführung sind mit durchgezogenen Pfeilen dargestellt. Fig. 2 zeigt darüber hinaus eine alternative Routenführung mit alternativen Navigationsrichtungen 210, die mit gestrichelten Pfeilen dargestellt sind. Die alternative Routenführung beginnt am Abzweigungsort 208. Die alternative Routenführung war aufgrund eines Staus auf der ursprünglichen Route angezeigt. Das Fahrzeug befindet sich an einem gegenwärtigen Ort 214 auf der ursprünglichen Route. Auf dem Display 126 des Navigationsgeräts 102 wird ein aktueller Kartenausschnitt 214 dargestellt. In diesem Ausführungsbeispiel befindet sich der Ort der Abweichung 208 weit außerhalb des dargestellten Kartenausschnittes 202. Dies liegt zum einen am eingestellten Zoom-Level, der hier hoch ist, d.h. momentan werden viele Details dargestellt, zum anderen an der Entfernung zwischen dem gegenwärtigen Ort 214 des Fahrzeugs und dem Ort der Abweichung 208. Würde dem Nutzer bereits an diese Stelle ein Hinweis über die alternative Routenführung gegeben, so wäre der Nutzer möglicherweise unnötigerweise abgelenkt, da es möglich ist, dass sich der Stau auf der ursprünglichen Route wieder auflöst, bevor der Ort der Abzweigung erreicht wird. In diesem Fall würde das Karten- und Navigationsmodul 136, welches regelmäßig Echtzeitverkehrsdaten anfordert, die Routenführung zu der ursprünglichen Routenführung aktualisieren. Der Nutzer wäre unnötigerweise abgelenkt. Das Karten- und Navigationsmodul 136 erzeugt mithin einen Hinweis über eine Änderung in Abhängigkeit des Zoom-Levels des auf dem Display dargestellten Kartenausschnitts in Bezug auf den Ort der Abweichung zwischen ursprünglicher Route und alternativer Route. In diesem Fall würde der Hinweis für den Nutzer zunächst unterbleiben, da sich der Ort der Abweichung weit außerhalb des dargestellten Kartenausschnittes befindet. Bewegt sich der Nutzer weiter entlang der Route bei gleichbleibendem Zoom des Kartenausschnitts, so gelangt er zu einem Ort, an welchem ein Hinweis über die Änderung der Routenführung angezeigt ist.

Fig. 3 zeigt die in Fig. 2 dargestellte Routenführung, wobei sich der Fahrer etwas weiter entlang der ursprünglichen Route 312 zwischen Ursprung 304 und Ziel 306 bewegt hat und sich nunmehr am weiter vom Ursprung 304 entfernten Ort 314 befindet. Der Kartenausschnitt 314 weist dasselbe Detaillevel wie in Fig. 2 auf, der Zoom hat sich mithin nicht verändert. Der Ort der Abweichung 308 befindet sich nunmehr näher am oberen Rand des auf dem Display dargestellten Kartenausschnittes. Der Ort der Abweichung 308 befindet sich hier innerhalb eines Abstandes der 20% der vertikalen Bildhöhe des dargestellten Kartenausschnitts 414 entspricht und durch die gestrichelte Linie dargestellt ist. Da aufgrund des hohen Zoomlevels der Ort der Abweichung zeitnah erreicht wird und zu baldigen Fahrmanövern führt, bestimmt das Karten- und Navigationsmodul 136, dass ein akustischer Hinweis über die geänderte Routenführung an den Nutzer über die akustischen Ausgabemittel 128 ausgeben werden soll. Der Nutzer kann aufgrund dieses akustischen Hinweises bereits an dieser Stelle den Zoom-Level verringern und sich somit die geänderte Routenführung auf dem Display 126 anschauen. Die ursprüngliche Route 212 und die alternative Route 210 werden dem Nutzer für einen gewissen Zeitraum parallel angezeigt, wobei die alternative Route 210 anders dargestellt ist als die ursprüngliche Route 212. Die alternative Route 210 kann in einer anderen Farbe dargestellt sein oder blinken. Als Alternative zur Verringerung des Zoom-Levels kann der Nutzer jedoch auch den gegenwärtigen hohen Zoom-Level beibehalten. In jedem Fall kann die mit der alternativen Route geänderte Fahrzeit als Überlagerung von ursprünglicher Fahrzeit und einer Differenz zwischen ursprünglicher und geänderter Fahrzeit dargestellt werden. Aufgrund des sich auf der ursprünglichen Route 312 befindlichen Staus wird angenommen, dass sich die Fahrzeit durch die alternative Route 310 erhöht. Es wird mithin die geänderte Fahrzeit als ursprüngliche Fahrzeit plus zusätzliche Fahrzeit dargestellt. Anhand dieser Information kann der Nutzer entscheiden, ob er den Zoom-Level beibehält oder verringert, um sich die gesamte alternative Routenführung anzusehen.

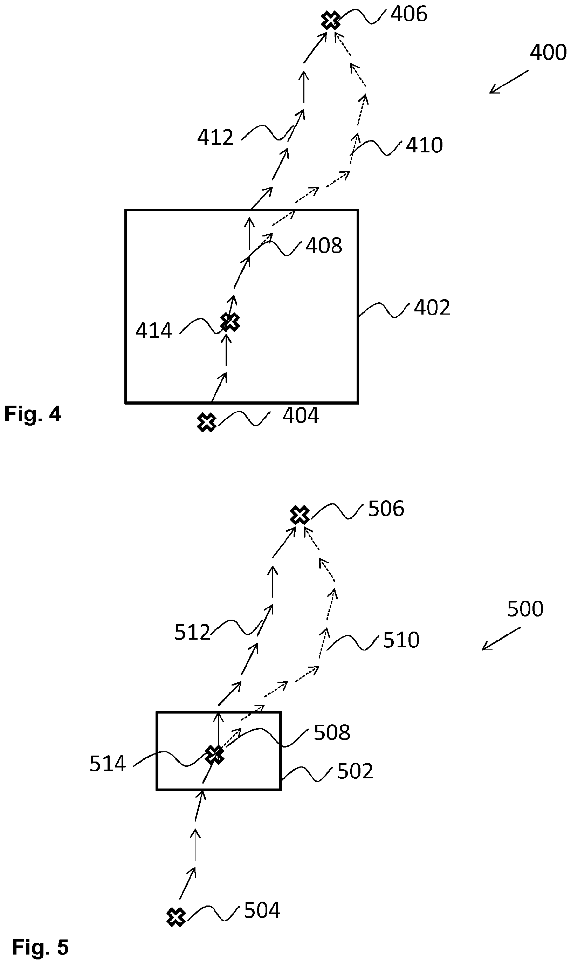

Fig. 4 zeigt die in Fig. 2 dargestellte Routenführung, wobei sich der Fahrer wiederum entlang der ursprünglichen Route zwischen Ursprung 404 und Ziel 406 bewegt hat und sich nunmehr an derselben Stelle 414 wie in Fig. 3 gezeigt befindet. Der Kartenausschnitt 314 weist jedoch ein geringes Detaillevel als in Fig. 2 und Fig. 3 auf. Es handelt sich um einen weiter herausgezoomten Kartenausschnitt, d.h. um einen Kartenausschnitt mit niedrigem Zoom-Level. Es sei angenommen, dass der Fahrer den Zoomlevel aus eigenem Antrieb soeben geändert hat, so dass der geänderte Teil der Route in den Darstellungsbereich und somit auch der Ort der Abweichung 408 zwischen ursprünglicher Route 412 und alternativer Route 410 fallen. In diesem Moment ist der Fahrer ohnehin abgelenkt, so dass die zusätzliche Ablenkung durch einen akustischen Hinweis über die Änderung der Routenführung nicht ins Gewicht fällt. Aus diesem Grund wird mit Änderung des Zoomlevels der akustische Hinweis über die Ausgabemittel 128 ausgegeben.

Fig. 5 zeigt die in Fig. 2 dargestellte Routenführung, wobei sich der Fahrer wiederum entlang der ursprünglichen Route 512 zwischen Ursprung 504 und Ziel 506 bewegt hat und sich an einer Stelle 514 befindet, die sich unmittelbar vor dem Ort der Abweichung 508 zwischen der ursprünglichen Route 512 und der geänderten Route 510 befindet. Der Kartenausschnitt 314 weist dasselbe Detaillevel wie in Fig. 2 und Fig. 3 auf. Es handelt sich um einen Kartenausschnitt 314 mit hohem Zoomlevel. Es sei angenommen, dass das Karten- und Navigationsmodul 136 soeben vom Echtzeitverkehrsdatenserver 108 Echtzeitverkehrsdaten 148 angefordert hat, diese im Speicher 124 als gespeicherte Echtzeitverkehrsdaten 134 abgelegt hat und die gespeicherten Echtzeitverkehrsdaten 134 hinsichtlich ihrer Relevanz für eine gegenwärtige Routenführung analysiert hat. Im Ergebnis diese Analyse hat das Karten- und Navigationsmodul 136 bestimmt, dass eine alternative Route 510 gefahren werden soll. Über diese Routenänderung wird der Fahrer unmittelbar über das Touchdisplay informiert, da er sich bereits in unmittelbarer Nähe zu dem Ort der Abweichung zwischen ursprünglicher Route 512 und geänderter Route 510 befindet. Da die unmittelbar bevorstehende Routenänderung ohnehin die Aufmerksamkeit des Fahrers erfordert, veranlasst das Karten- und Navigationsmodul 136 zusätzlich einen akustischen Hinweis über die akustischen Ausgabemittel 128.

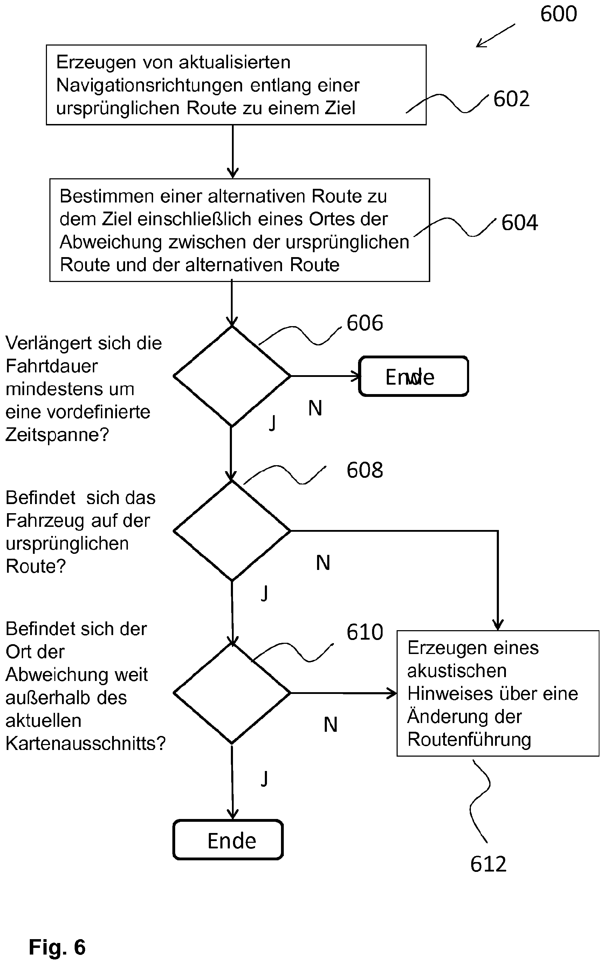

In allen oben beschriebenen Ausgestaltungen kann vorgesehen sein, dass ein akustischer Hinweis über die geänderte Routenführung überhaupt erst dann ergehen soll, wenn sich die Fahrzeit um einen bestimmten Zeitraum erhöht. Dies ist im Flussdiagramm in Fig. 6 in Zusammenhang mit Fig. 1 dargestellt.

In der Navigationseinrichtung 102 erzeugt das Karten- und Navigationsmodul 136 anhand der gespeicherten Kartendaten 130 und Echtzeitverkehrsdaten 143 Navigationsdaten 132 in Form aktualisierter Navigationsrichtungen entlang einer ursprünglichen Route zu einem Ziel in Schritt 602. Das Karten- und Navigationsmodul 136 bestimmt eine alternative Route zu dem Ziel einschließlich eines Ortes der Abweichung zwischen der ursprünglichen Route und der alternativen Route in Schritt 604, wenn die aktualisierten Navigationsrichtungen von den ursprünglichen Navigationsrichtungen abweichen. Das Karten- und Navigationsmodul speichert die Navigationsdaten 132 im Speicher 124. In Schritt 606 bestimmt das Karten- und Navigationsmodul 136, ob sich die Fahrtdauer auf der alternativen Route um mindestens eine vordefinierte Zeitspanne verlängert. Diese Zeitspanne kann durch den Fahrer über die Benutzerschnittstelle 126 voreingestellt sein im Speicher 124 abgelegt sein. Die Zeitspanne kann absolut vorgegeben werden, bspw. 3 oder 5 min, oder prozentual in Bezug auf die ursprüngliche noch verbleibende Fahrdauer. Verlängert sich die Fahrdauer nicht mindestens um die vordefinierte Zeitspanne, so terminiert das Verfahren, da das Erzeugen eines akustischen Hinweises über die Routenänderung eine unnötige Ablenkung des Fahrers zur Folge hätte. Verlängert sich hingegen die Fahrdauer mindestens um die vordefinierte Zeitspanne, so überprüft das Karten- und Navigationsmodul 136, ob sich das Fahrzeug auf der ursprünglichen Route befindet. Befindet sich das Fahrzeug nicht auf der ursprünglichen Route, so wird davon ausgegangen, dass der Fahrer der vorgeschlagenen ursprünglichen Route nicht gefolgt ist und sich selbst auf die alternative Route begeben hat. Da dies nunmehr mit einer erheblichen Verlängerung der Fahrdauer verbunden ist, erzeugt das Karten- und Navigationsmodul 126 mittels der akustischen Ausgabemittel 128 einen akustischen Hinweis. Wird in Schritt 608 festgestellt, dass sich das Fahrzeug auf der ursprünglichen Route befindet, so bestimmt das Karten- und Navigationsmodul 136 in Schritt 610 ob sich der Ort der Abweichung zwischen ursprünglicher Route und alternativer Route weit außerhalb des aktuellen Kartenausschnitts befindet. Ist dies nicht der Fall, so erzeugt das Karten- und Navigationsmodul 126 mittels der akustischen Ausgabemittel 128 einen akustischen Hinweis. Ist dies nicht der Fall, so würde dies an dieser Stelle eine unnötige Ablenkung des Fahrers zur Folge haben, weswegen das Verfahren terminiert.

Das in Fig. 6 dargestellte Verfahren kann auch durch eine alternative Navigationsarchitektur im Vergleich zu der in Fig. 1 gezeigten Navigationsarchitektur umgesetzt werden. So kann ein Fahrzeug über mehrere universell einsetzbare Recheneinheiten verfügen, welche z.B. als Steuergeräte (Electronic Control Units ECUs) gestaltet sein können. Hierbei läuft eine Navigationsanwendung mit dem in Fig. 6 dargestellten Verfahren auf einem tragbaren Kommunikationsgerät, z.B. auf einem Smartphone, Tablet oder Phablet. Hierbei kann das Fahrzeug ein kurzfristig anmietbares Mietfahrzeug einer floating-car-Mietflotte sein und der Mietvorgang und der Autorisierungsprozess des Fahrers am Fahrzeug kann auch mittels des tragbaren Kommunikationsgeräts bzw. von Anwendungen darauf realisiert werden. Hierbei hat das Kommunikationsgerät die Rolle eines Human Machine Interface (HMI). Ein Backend stellt Karten- und Echtzeitverkehrsdaten bereit, auf welches mindestens eine universell einsetzbare Recheneinheit zugreifen kann. Eine oder mehrere universell einsetzbare Recheneinheiten berechnen Navigationsdaten. Dies hat den Vorteil, dass bei detaillierteren Navigationsdatensätzen wie z.B. bei eHorizon, von der leistungsfähigeren Hardware der universellen Recheneinheiten des Fahrzeugs Gebrauch gemacht wird.

Der Fahrer eines Fahrzeugs kann sich mit seinem tragbaren Kommunikationsgerät dem Fahrzeug näheren und sich autorisieren, wobei das tragbare Kommunikationsgerät mit dem Fahrzeug eine Kommunikationsverbindung aufbaut. Danach kann der Fahrer eine Navigationsanwendung auf dem Kommunikationsgerät starten, wobei das Kommunikationsgerät als HMI dient und zur Berechnung auch ECUs des Fahrzeugs verwendet, deren Rechenleistung vom Fahrzeug zur Verfügung gestellt werden. Ob die Kommunikationsverbindung zum Backend, welches die detaillierten Karteninformationen bereithält, dabei über Einrichtungen des Fahrzeugs oder des tragbaren Kommunikationsgerätes laufen, ist nicht festgelegt. Da jeder Fahrer sein eigenes tragbares Kommunikationsgerät mitbringt, gibt es eine Vielzahl möglicher Kombinationen aus fahrzeugseitigen Recheneinheiten und tragbarem Kommunikationsgerät.

Es kann alternativ ein Navigationsgerät zum Einsatz kommen, welches statische Karteninformationen in einem internen Speicher vorhält und die Routenführung selbst berechnet. Dynamischen Input erhält es über die Ermittlung der Position mittels des globalen Navigationssatellitensystems (GNSS) sowie Verkehrsinformationen über Funk, z.B. mittels eines Verkehrsnachrichtenkanals (Traffic Message Channel). Wenn hierbei eine Staumeldung/Sperrung eingeht, die zu einer unwesentlichen Routenänderung führt, kann das in Fig. 6 dargestellte Verfahren zum Einsatz kommen.

## Patentansprüche

1. Verfahren zum Erzeugen von dynamischen Hinweisen über eine Änderung einer Routenführung aufweisend:
Erzeugen von ursprünglichen Navigationsrichtungen (102), durch einen oder mehrere Prozessoren (122), entlang einer ursprünglichen Route (212, 412, 512, 612) zwischen einem Ursprung (204, 404, 504, 604) und einem Ziel) und einem Ziel (206, 406, 506, 606);
Bestimmen einer alternativen Route (210, 410, 510, 610) zu dem Ziel, durch eine oder mehrere Prozessoren, einschließlich eines Ortes der Abweichung (208, 408, 508, 608) zwischen der ursprünglichen Route und der alternativen Route; und
Erzeugen eines akustischen Hinweises über eine Änderung der Routenführung, **dadurch gekennzeichnet, dass** das Erzeugen in Abhängigkeit von dem Ort der Abweichung in Bezug auf einen auf einem Display (126)dargestellten Kartenausschnitt (202) erfolgt, wobei das Erzeugen des Hinweises über eine Änderung der Routenführung erfolgt, wenn sich der Ort der Abweichung in einem vordefinierten Abstand außerhalb des Randes des dargestellten Kartenausschnittes (202) befindet.

2. Verfahren nach Anspruch 1, wobei sich der vordefinierte Abstand als Anteil der vertikalen Bildhöhe oder der horizontalen Bildbreite des auf dem Display (126) dargestellten Kartenausschnittes (202) ergibt.

3. Verfahren nach Anspruch 2, wobei der Anteil von einem Benutzer einstellbar oder auswählbar ist.

4. Verfahren nach Anspruch 1, wobei das Erzeugen des Hinweises über eine Änderung der Routenänderung erfolgt, wenn der Ort der Abweichung (208, 408, 508, 608) innerhalb eines vordefinierten Zeitraumes in dem auf dem Display (126) dargestellten Kartenausschnitt (202) dargestellt werden würde.

5. Verfahren nach einem der Ansprüche 1 bis 4, wobei das Erzeugen des Hinweises nur dann erfolgt, wenn sich durch die Änderung der Routenführung eine Ankunftszeit um eine vordefinierte Zeit oder eine vordefinierte Strecke ändert.

6. Verfahren nach einem der Ansprüche 1 bis 5, ferner aufweisend: zumindest vorübergehendes Darstellen, auf dem Display (126), einer Gesamtroute zwischen dem Ursprung (204, 404, 504, 604) und dem Ziel (206, 406, 506, 606), wobei die alternative Route (210, 410, 510, 610) hervorgehoben dargestellt wird.

7. Verfahren nach einem der Ansprüche 1 bis 5, ferner aufweisend: zumindest vorübergehendes Darstellen, auf dem Display (126), eines Teilbereichs einer Gesamtroute zwischen dem Ursprung (204, 404, 504, 604) und dem Ziel (206, 406, 506, 606), wobei der Teilbereich der Gesamtroute die alternative Route umfasst.

8. Verfahren nach Anspruch 6 oder 7, wobei die alternative Route (210, 410, 510, 610) farblich unterschiedlich von der ursprünglichen Route (212, 412, 512, 612) oder blinkend dargestellt wird.

9. Datenverarbeitungsgerät (102) aufweisend:
Prozessor (122) eingerichtet zum
Erzeugen von ursprünglichen Navigationsrichtungen (102), entlang einer ursprünglichen Route (212, 412, 512, 612) zwischen einem Ursprung (204, 404, 504, 604) und einem Ziel (206, 406, 506, 606) ;
Bestimmen einer alternativen Route (210, 410, 510, 610) zu dem Ziel einschließlich eines Ortes der Abweichung zwischen der ursprünglichen Route und der alternativen Route; und Ausgabemittel (128) zum Erzeugen eines akustischen Hinweises über eine Änderung der Routenführung, **dadurch gekennzeichnet, dass** das Erzeugen in Abhängigkeit des Zoom-Levels eines auf einem Display (126) dargestellten Kartenausschnittes (202) in Bezug auf den Ort der Abweichung erfolgt, wobei
das Erzeugen des Hinweises über eine Änderung der Routenführung erfolgt, wenn sich der Ort der Abweichung (208, 408, 508, 608) in einem vordefinierten Abstand außerhalb des Randes des dargestellten Kartenausschnittes (202) befindet.

## Claims

1. Method for generating dynamic information about a change to a route plan, comprising:
generating original navigation directions (102), by way of one or more processors (122), along an original route (212, 412, 512, 612) between a starting point (204, 404, 504, 604) and a destination (206, 406, 506, 606);
determining an alternative route (210, 410, 510, 610) to the destination, by way of one or more processors, including a location of the deviation (208, 408, 508, 608) between the original route and the alternative route; and
generating acoustic information about a change to the route plan, **characterized in that** the generating is effected depending on the location of the deviation in relation to a map section (202) displayed on a display (126),
wherein the information about a change to the route plan is generated when the location of the deviation is situated at a predefined distance outside the edge of the displayed map section (202) .

2. Method according to Claim 1, wherein the predefined distance is obtained as a proportion of the vertical image height or of the horizontal image width of the map section (202) displayed on the display (126).

3. Method according to Claim 2, wherein the proportion is able to be set or selected by a user.

4. Method according to Claim 1, wherein the information about a change to the route plan is generated when the location of the deviation (208, 408, 508, 608) would be displayed in the map section (202) displayed on the display (126) within a predefined period of time.

5. Method according to one of Claims 1 to 4, wherein the information is generated only when an arrival time changes by a predefined time or a predefined distance due to the change to the route plan.

6. Method according to one of Claims 1 to 5, also comprising:
at least temporarily displaying an entire route between the starting point (204, 404, 504, 604) and the destination (206, 406, 506, 606) on the display (126), wherein the alternative route (210, 410, 510, 610) is displayed in highlighted form.

7. Method according to one of Claims 1 to 5, also comprising:
at least temporarily displaying a subarea of an entire route between the starting point (204, 404, 504, 604) and the destination (206, 406, 506, 606) on the display (126), wherein the subarea of the entire route comprises the alternative route.

8. Method according to Claim 6 or 7, wherein the alternative route (210, 410, 510, 610) is displayed in a different colour from the original route (212, 412, 512, 612) or in flashing form.

9. Data processing device (102) having:
a processor (122) configured so as to generate original navigation directions (102) along an original route (212, 412, 512, 612) between a starting point (204, 404, 504, 604) and a destination (206, 406, 506, 606);
determine an alternative route (210, 410, 510, 610) to the destination including a location of the deviation between the original route and the alternative route; and
output means (128) for generating acoustic information about a change to the route plan, **characterized in that** the generating is effected depending on the zoom level of a map section (202) displayed on a display (126) in relation to the location of the deviation, wherein
the information about a change to the route plan is generated when the location of the deviation (208, 408, 508, 608) is situated at a predefined distance outside the edge of the displayed map section (202).

## Revendications

1. Procédé permettant de générer des indications dynamiques concernant un changement de guidage d'itinéraire, présentant les étapes consistant à :
générer des directions de navigation d'origine (102), par un ou plusieurs processeurs (122), le long d'un itinéraire d'origine (212, 412, 512, 612) entre une origine (204, 404, 504, 604) et une destination (206, 406, 506, 606) ;
déterminer un itinéraire alternatif (210, 410, 510, 610) jusqu'à la destination, par un ou plusieurs processeurs, y compris un emplacement de l'écart (208, 408, 508, 608) entre l'itinéraire d'origine et l'itinéraire alternatif ; et
générer une indication acoustique concernant un changement du guidage d'itinéraire,
**caractérisé en ce que** la génération est effectuée en fonction de l'emplacement de l'écart par rapport à une section de carte (202) représentée sur un dispositif d'affichage (126), la génération de l'indication concernant un changement du guidage d'itinéraire étant effectuée si l'emplacement de l'écart se trouve à une distance prédéfinie à l'extérieur du bord de la section de carte (202) représentée.

2. Procédé selon la revendication 1, dans lequel la distance prédéfinie résulte comme une proportion de la hauteur d'image verticale ou de la largeur d'image horizontale de la section de carte (202) représentée sur le dispositif d'affichage (126).

3. Procédé selon la revendication 2, dans lequel la proportion peut être réglée ou sélectionnée par un utilisateur.

4. Procédé selon la revendication 1, dans lequel la génération de l'indication concernant un changement du guidage d'itinéraire est effectuée si l'emplacement de l'écart (208, 408, 508, 608) était représenté à l'intérieur d'une période prédéfinie dans la section de carte (202) représentée sur le dispositif d'affichage (126) .

5. Procédé selon l'une quelconque des revendications 1 à 4, dans lequel la génération de l'indication n'est effectuée que si le changement du guidage d'itinéraire modifie une heure d'arrivée d'un délai prédéfini ou d'une distance prédéfinie.

6. Procédé selon l'une quelconque des revendications 1 à 5, présentant en outre :
la représentation au moins temporaire, sur le dispositif d'affichage (126), d'un itinéraire total entre l'origine (204, 404, 504, 604) et la destination (206, 406, 506, 606), l'itinéraire alternatif (210, 410, 510, 610) étant mis en évidence.

7. Procédé selon l'une quelconque des revendications 1 à 5, présentant en outre :
la représentation au moins temporaire, sur le dispositif d'affichage (126), d'une zone partielle d'un itinéraire total entre l'origine (204, 404, 504, 604) et la destination (206, 406, 506, 606), la zone partielle de l'itinéraire total comprenant l'itinéraire alternatif.

8. Procédé selon la revendication 6 ou 7, dans lequel l'itinéraire alternatif (210, 410, 510, 610) est représenté dans une couleur différente de l'itinéraire d'origine (212, 412, 512, 612) ou clignotant.

9. Appareil de traitement de données (102), présentant :
un processeur (122) aménagé pour
générer des directions de navigation d'origine (102) le long d'un itinéraire d'origine (212, 412, 512, 612) entre une origine (204, 404, 504, 604) et une destination (206, 406, 506, 606) ;
déterminer un itinéraire alternatif (210, 410, 510, 610) jusqu'à la destination, y compris un emplacement de l'écart entre l'itinéraire d'origine et l'itinéraire alternatif ; et
des moyens de sortie (128) destinés à générer une indication acoustique concernant un changement du guidage d'itinéraire,
**caractérisé en ce que** la génération est effectuée en fonction du niveau de zoom d'une section de carte (202) représentée sur un dispositif d'affichage (126) par rapport à l'emplacement de l'écart,
la génération de l'indication concernant un changement du guidage d'itinéraire étant effectuée si l'emplacement de l'écart (208, 408, 508, 608) se trouve à une distance prédéfinie à l'extérieur du bord de la section de carte (202) représentée.
